# EUROPEAN PATENT APPLICATION

(11) **EP 2 816 458 A1**
(43) Date of publication of application: **24.12.2014**
(21) Application number: 13305823.0
(22) Date of filing: 18.06.2013
(51) Int. Cl.: G06F 3/0484, G06T 11/60

(54) **Method and apparatus for controlling example-based image manipulation**

(71) Applicant: Thomson Licensing, 92130 Issy-les-Moulineaux (FR)
(72) Inventor: Hellier, Pierre, 35235 Thorigné Fouillard (FR); Sabater, Neus, 35700 Rennes (FR); Perez, Patrick, 35200 Rennes (FR)
(74) Representative: Schiller, Harald

(57) **Abstract**

A method and apparatus for controlling example-based image manipulation are disclosed where selection of example imagery and workpiece imagery is done with a pointing device (605). For increasing the efficiency of controlling, selection of an image characteristic to be transferred is derived from an interaction sensed on a second input device (603, 611, 612, 613, 614) during a motion time interval of the pointing device (605).

## Description

### Field of the invention

The present invention relates to controlling example-based manipulation of digital images, for example controlling example-based image colorization.

### Background of the invention

Example-based image manipulation is a relatively new field in computer vision. It consists in taking benefit from examples to enhance or modify an image. Example-based image colorization is one example thereof. In example-based image colorization, a black and white input image may be given, that needs to be colorized. Or a colour input image may be given, whose colorization is to be replaced by a different colorization. Instead of a long and tedious manual colorization process, a set of example images is used, from which the given input image, also denoted as workpiece image in the following, is automatically colorized. The example images are supposed to depict, at least partially, the same objects or scenery than the workpiece image.

Many state-of-the-art techniques for example-based image manipulation rely on a step of finding patch correspondences between a patch in the workpiece image to be colorized and patches in the given example image or images. Then, the found patch correspondences are used to transfer a selected image signal property, also denoted as image characteristic in the following, from the example image or images to the workpiece image patch.

Signal properties or image characteristics that can be transferred from one image to another comprise image resolution, contrast, texture, blurriness, colour, or others. In the particular case of transferring colour, it may be desirable to select or deselect individual colour channels. It can be envisaged, for instance, that in a particular colorization project, given a particular scope and quality of example images, a first colour channel is preferentially transferred from a first subset of the example images, whereas another colour channel might be most appropriately transferred from another, different subset of the example images. In parts of the subsequent disclosure, transferring colour will be described, amounting to an act of image colorization. As should be clear by now, the invention is however not limited to this application.

US 5,732,230 purports to disclose a system for manipulating image fragments so that image processing devices may efficiently process oversize images. The system provides a user interface so that when an oversize image is scanned into multiple image fragments the user can manipulate these by performing drag, drop and merge operations on them. Embodiments of the invention include the use of a touch screen or mouse to allow the user to perform the operations. Other operations are selectable such as rotating an image fragment, zooming in or out on portions of the displayed fragments, merging the fragments into an integrated image and storing or printing the image fragments.

### Invention

The invention starts with the observation that example-based image manipulation, notwithstanding all differences in algorithmic detail, typically involves the following steps:
- Selecting an image or images to be manipulated, as a workpiece image;
- Selecting an image or images to be used as example image;
- Selecting the image characteristic to be modified. This may be implicitly given by choosing one among a set of single-purpose image manipulation tools.
- Starting the image manipulation process itself, using the previous selections.

In the above, "image" is meant to denote not only single still images stored as individual files, but also compact or non-compact subsets of image sequences and/or spatial subsets thereof. The images may be black and white, any kind of colour, computer generated, cartoon drawings, or even based on non-visible radiation like infrared or radar. **"Imagery"** will be used in the following to denote all these.

Seen from a User Interface perspective, the steps described above correspond to four user interaction steps. Concatenating known implementations of these steps constitutes a limitation since the act of controlling the image manipulation then requires considerable time. Improvement in a sense of more efficient control of the process is thus desirable.

The invention proposes a method for controlling example-based image manipulation that enables that the above mentioned User Interface steps all are embedded within the file system, or within any other application software. For this, the invention proposes a combination of user input actions using more than one input device. The expected benefit is thus a higher usability of example-based techniques, which translates into increased efficiency and productivity, as well as a decrease in operator fatigue.

Publications of example-based image manipulation can be found for instance in an article entitled "Image Analogies", published in the Proceedings of SIGGRAPH 2001, Annual Conference Series, pp. 327-340; in an article entitled "Example-based regularization deployed to super-resolution reconstruction of a single image", published in The Computer Journal, 2007; or in an article entitled "Non-rigid Dense Correspondence with Applications for Image Enhancement", published in ACM Trans. Graph. 30, 4, 70:1-70:9.

It is an object of the invention to provide an improved method for controlling an example-based image manipulator. According to the invention, this is achieved by a method that comprises receiving start coordinates from a pointing device, sensing a motion time interval of the pointing device, receiving end coordinates of the pointing device, using one of the start coordinates and the end coordinates for identifying a workpiece imagery, using a respective other one of the start coordinates and the end coordinates for identifying an example imagery, and causing the image manipulator to perform the image manipulation of the workpiece imagery such that a selected image characteristic is modified according to a content of the example imagery; wherein an interaction performed on a second input device during at least part of the motion time interval is sensed, and the selected image characteristic is derived therefrom.

It is another object of the invention to provide alternative embodiments. According to the invention, this is achieved by a method where the second input device is a keyboard and the interaction is a key of this keyboard being pressed; by a method where the second input device is additional keys provided on the pointing device and the interaction is one of these additional keys being clicked; by a method where the second input device is a second pointing device and the interaction is a cursor being moved thereon to one of a predefined set of positions; by a method where the second input device is a second pointing device and the interaction is one of a predefined set of gestures being performed thereon; by a method where the second input device is a speech input device and the interaction is one of a predefined set of commands being spoken into the speech input device; or by a method where the second input device is a foot pedal having a selection input and the interaction is a selection being input via the selection input.

Another object of the invention, to further improve the efficiency of controlling the example-based image manipulator, is achieved by a method wherein identifying a workpiece imagery comprises selecting more than one images or parts thereof, and the image manipulator is caused to perform the image manipulation on all images or parts thereof of the workpiece imagery; or by a method wherein identifying an example imagery comprises selecting more than one images or parts thereof, and the image manipulator is caused to perform the image manipulation such that the selected image characteristic is modified according to a content of all images or parts thereof of the example imagery.

### Drawings

Exemplary embodiments of the invention are explained in more detail in the following description and illustrated in the following Figures, in which
- **Fig. 1**: illustrates, in flow diagram style, steps of a first exemplary embodiment of the invention, from a User's perspective;
- **Fig. 2**: illustrates, in flow diagram style, steps of the corresponding method according to the first exemplary embodiment of the invention;
- **Fig. 3**: illustrates, in flow diagram style, steps of a second exemplary embodiment of the invention, from a User's perspective;
- **Fig. 4**: illustrates, in flow diagram style, steps of the corresponding method according to the second exemplary embodiment of the invention;
- **Fig. 5**: illustrates method steps related to selecting groups of images;
- **Fig. 6**: illustrates an apparatus equipped and configured to embody the invention.

### Exemplary embodiments

For the purpose of illustrating the following exemplary embodiments, it is assumed that the images that are selectable as example image or as workpiece image are symbolized, for instance by icons or thumbnails **607,** on a display **601.**

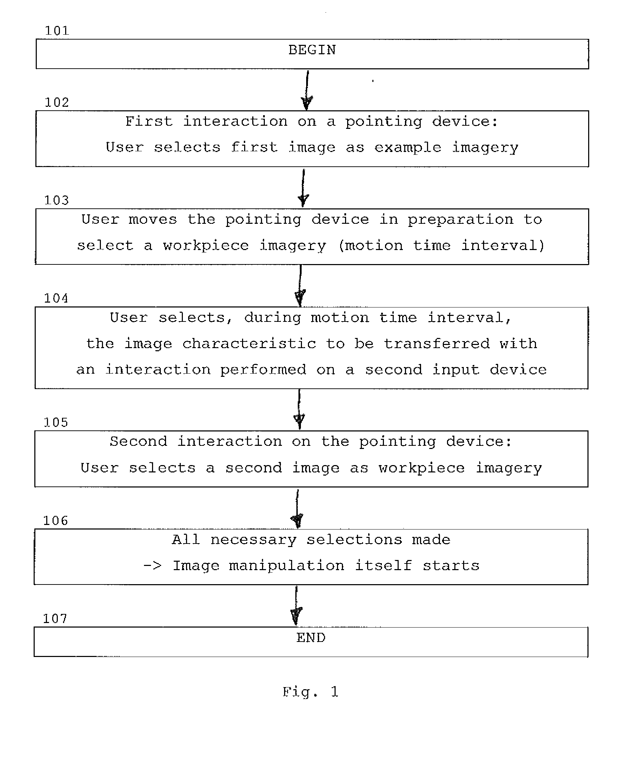

**Fig. 1** illustrates a first exemplary embodiment from a user's perspective. At the beginning **101,** the user selects **102** a first image as example imagery of which an image characteristic still to be selected shall be transferred. The user does this with a first interaction on a pointing device **605** which is a first input device.

The user interface may visualize that selection, for example by highlighting or blinking of the first image's symbol, by greying out other image symbols except the first image's one, by displaying a balloon near the first image's symbol, or by displaying an enclosing border around the first image's symbol.

The user then moves **103** the pointing device **605** in preparation to select a workpiece imagery onto which the image characteristic still to be selected shall be transferred. By this act of moving, a motion time interval of the pointing device is defined.

According to the invention, the user selects **104,** during this motion time interval of the pointing device **605,** the image characteristic to be transferred with an interaction performed on a second input device **603, 611, 612, 613, 614.** The second input device may be a keyboard **603,** in which case the interaction consists in a key **604** of this keyboard being pressed. Alternatively, it may consist in additional keys **611** provided on the pointing device **605,** in which case the interaction consists in clicking one of these additional keys **611.** Alternatively, the second input device may be a second pointing device **612,** operated with the other hand, in which case the interaction consists in moving a cursor to one of a predefined set of positions. With the same second pointing device **612,** the interaction may alternatively consist in performing one of a predefined set of gestures. Alternatively, the second input device may be a speech input device **613,** in which case the interaction consists in speaking one of a predefined set of commands into the speech input device **613.** Alternatively, the second input device may be a foot pedal **614** having a selection input **615,** in which case the interaction consists in activating with the foot any of these.

The user interface may visualize the image characteristic selection, for example by displaying an icon or symbol that is representative of the selected image characteristic, and/or by displaying an icon or symbol representing the status of the second input device **603, 611, 612, 613, 614,** like the keyboard key **604** that has been pressed.

With a second interaction on the pointing device **605,** the user then selects **105** a second image as workpiece imagery, after which the image manipulation itself may begin **106** and the interaction ends **107.**

The interactions on the pointing device **605,** comprising selecting **102** the example imagery and selecting **105** the workpiece imagery, can be embodied in different ways, all of which are meant to be within the scope of this invention. In one example thereof, the first interaction on the pointing device is a click and hold operation of a select element **606** on the pointing device **605;** the act of moving is what is commonly known as a drag operation, i.e. moving the pointing device **605** while keeping selected **606;** and the second interaction on the pointing device **605** is a drop operation, i.e. an act of releasing the select element **606.** In another example thereof, the first interaction on the pointing device **605** is a click and release operation of the select element **606;** the act of moving is nothing but moving the pointing device **605;** and the second interaction on the pointing device **605** is another click and release operation of the select element **606.**

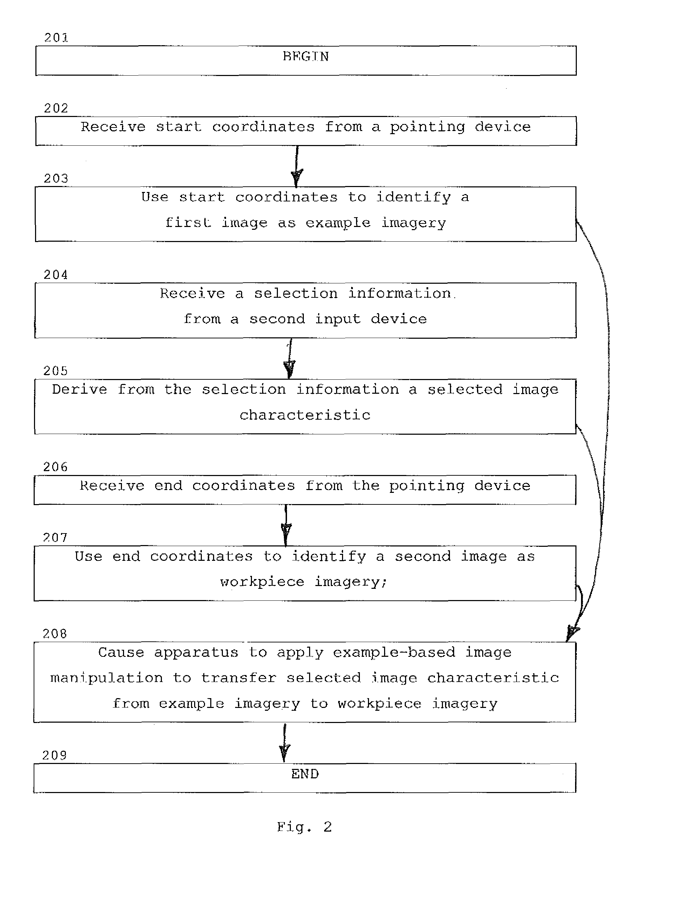

**Fig. 2** illustrates the pertaining technical method for controlling an example-based image manipulator **602,** from beginning **201** to end **209,** which comprises the following steps:
- receiving **202** start coordinates from a pointing device **605;**
- using **203** the start coordinates to identify a first image as example imagery;
- receiving **204** a selection information from a second input device **603, 611, 612, 613, 614;**
- deriving **205** from the selection information a selected image characteristic;
- receiving **206** end coordinates from the pointing device **605;**
- using **207** the end coordinates to identify a second image as workpiece imagery;
- causing **208** the image manipulator **602** to apply the example-based image manipulation to transfer the selected image characteristic from the example imagery to the workpiece imagery.

In this, as symbolized in **Fig. 2****,** the step of receiving **202** start coordinates must be performed before the step of using **203** the start coordinates. The step of receiving **204** a selection information must be performed before the step of deriving **205** from the selection information. The step of receiving **206** end coordinates must be performed before the step of using **207** the end coordinates. And the step of causing **208** the image manipulator **602** must be performed after the steps of using **203** the start coordinates, deriving **205** from the selection information, and using **207** the end coordinates. Otherwise, the order of steps is arbitrary.

The step of receiving **204** a selection information from a second input device **603, 611, 612, 613, 614** may comprise:
- on a keyboard **603,** sensing a key **604** being pressed during at least part of the motion time interval of the pointing device **605;**
- when the pointing device **605** is equipped with additional keys **611,** sensing a pointing device key **611** being pressed during at least part of the motion time interval;
- on a second pointing device **612,** sensing that a cursor has been moved to one of a predefined set of positions;
- on the second pointing device **612,** sensing that one of a predefined set of gestures has been performed.
- on a speech input device **613,** detecting one of a predefined set of commands; or
- on a foot pedal **614,** sensing a selection input **615;**
or any combination thereof, as suitable.

The method may additionally comprise steps of visualizing the identified example imagery, visualizing the selected image characteristic, and/or visualizing the identified workpiece imagery.

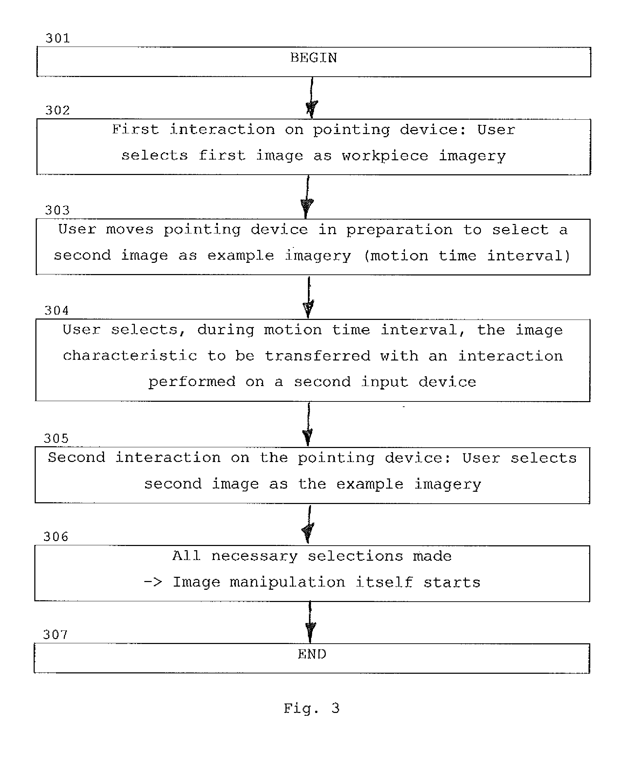

**Fig. 3** illustrates a second exemplary embodiment from a user's perspective. At the beginning **301,** the user selects **302,** with a first interaction on a pointing device **605,** a first image as workpiece imagery onto which an image characteristic still to be selected shall be transferred. The user interface may visualize that selection as described above. The user then moves **303** the pointing device **605** in preparation to select a second image as example imagery from which the image characteristic still to be selected shall be transferred. According to the invention, the user selects **304,** during the motion time interval of the pointing device, the image characteristic to be transferred with an interaction performed on a second input device **603, 611, 612, 613, 614.** The User Interface may visualize the image characteristic selection as described above.

With a second interaction on the pointing device **605,** the user then selects **305** a second image as the example imagery, i.e. as the image or images or parts thereof whose image characteristic shall be transferred to the previously selected workpiece imagery. After this second selection, the image manipulation may begin **306** and the interaction ends **307.**

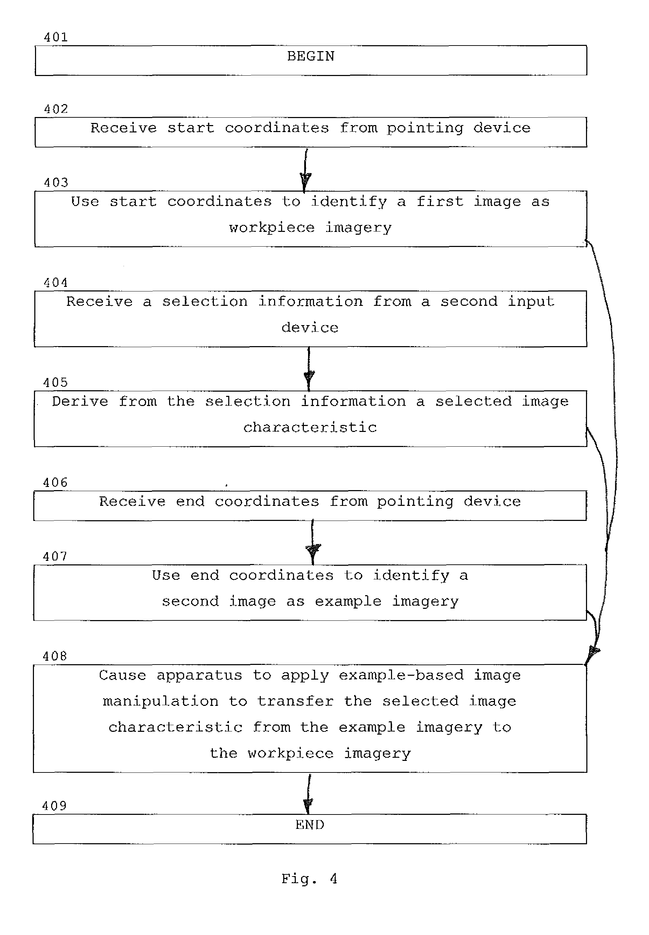

**Fig. 4** illustrates the pertaining technical method for controlling an example-based image manipulator **602,** from beginning **401** to end **409,** which comprises the following steps:
- receiving **402** start coordinates from a pointing device **605;**
- using **403** the start coordinates to identify a first image as workpiece imagery;
- receiving **404** a selection information from a second input device **603, 611, 612, 613, 614;**
- deriving **405** from the selection information a selected image characteristic;
- receiving **406** end coordinates from the pointing device **605;**
- using **407** the end coordinates to identify a second image as example imagery;
- causing **408** the image manipulator **602** to apply the example-based image manipulation to transfer the selected image characteristic from the example imagery to the workpiece imagery.

The method may additionally comprise steps of visualizing the identified workpiece imagery, visualizing the selected image characteristic, and/or visualizing the identified example imagery.

In this, as symbolized in **Fig. 4****,** the step of receiving **402** start coordinates must be performed before the step of using **403** the start coordinates. The step of receiving **404** a selection information must be performed before the step of deriving **405** from the selection information. The step of receiving **406** end coordinates must be performed before the step of using **407** the end coordinates. And the step of causing **408** the image manipulator **602** must be performed after the steps of using **403** the start coordinates, deriving **405** from the selection information, and using **407** the end coordinates. Otherwise, the order of steps is arbitrary.

In an advantageous further development, at least one of the interactions on the pointing device **605,** which are done to either select **102, 305** an example imagery or to select **105, 302** a workpiece imagery, may be expanded to allow selection of a group of images instead of just a single image.

Selecting a group of images as example imagery may be beneficial for instance in situations where the correspondences between example image patches and workpiece image patches are weak or difficult to find. Having a group of images as example imagery may be understood as applying the image manipulation sequentially, using each image from the group as example image and superimposing the manipulations performed on the workpiece image patches. This can then be seen to improve the performance.

Selecting a group of images as workpiece imagery may be beneficial for instance in situations where the workpiece images in the group are very similar to each other. One situation where this occurs is for consecutive images from slow motion sequences having been captured at an increased picture frequency. Having a group of images as workpiece imagery may be understood as transferring the selected image characteristic from the example imagery to each individual image in the workpiece imagery. This can be seen to simplify the User Interaction and thus increase the efficiency of controlling the apparatus. Depending on the available hardware, the example-based manipulation of several workpiece images may of course be performed serially or in parallel or in any combination thereof.

For selecting more than one image into a single group of images, several User Interface paradigms exist, for instance a click for the first selection and subsequent instances of "control-click" for the subsequent additions to the group. Or, performed with a pointing device **605,** an act of "wipe-through", where every item whose symbol **607** on a display **601** has been touched by the pointing device's cursor, is assumed to be selected and is typically highlighted as such. Or, often denoted as lasso mode, an act of enclosing the objects to be selected by drawing a border around their symbols **607** on the display **601.**

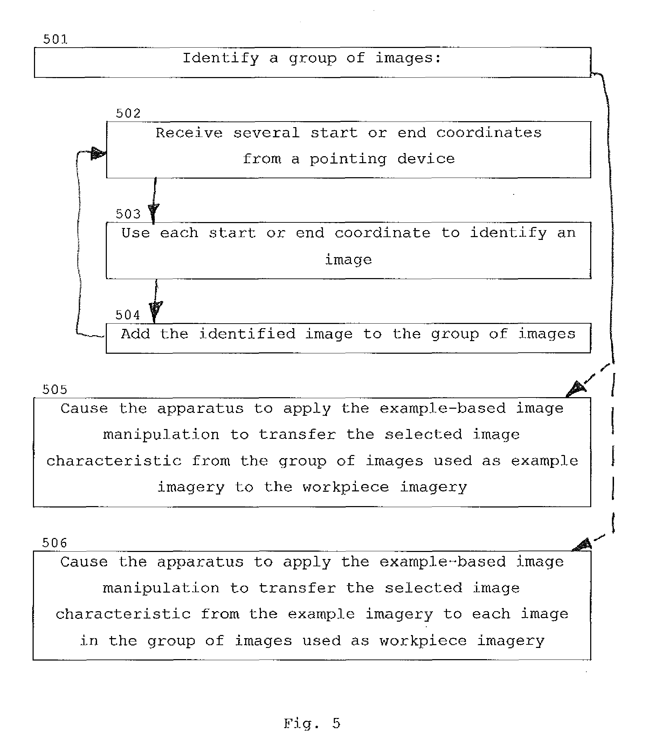

**Fig. 5** illustrates the pertaining steps in the technical method for controlling an example-based image manipulator **602.**
- identifying **501** a group of images by
   - receiving **502** several start or end coordinates from a pointing device **605;**
   - using **503** each start or end coordinate to identify an image; and
   - adding **504** the identified image to the group of images;
   and
- causing **505** the image manipulator **602** to apply the example-based image manipulation to transfer the selected image characteristic from the group of images used as example imagery to the workpiece imagery;
   or
- causing **506** the image manipulator **602** to apply the example-based image manipulation to transfer the selected image characteristic from the example imagery to each image in the group of images used as workpiece imagery.

In this, the step of identifying **501,** with its substeps of receiving **502,** using **503,** and adding **504,** may replace any or all of the steps of receiving **202** and using **203,** the steps of receiving **206** and using **207,** the steps of receiving **402** and using **403,** or the steps of receiving **406** and using **407.**

As should be clear by now, it may be advantageous to select a group of images instead of a single image for the example imagery as well as for the workpiece imagery. This, too, is meant to be within the scope of this invention.

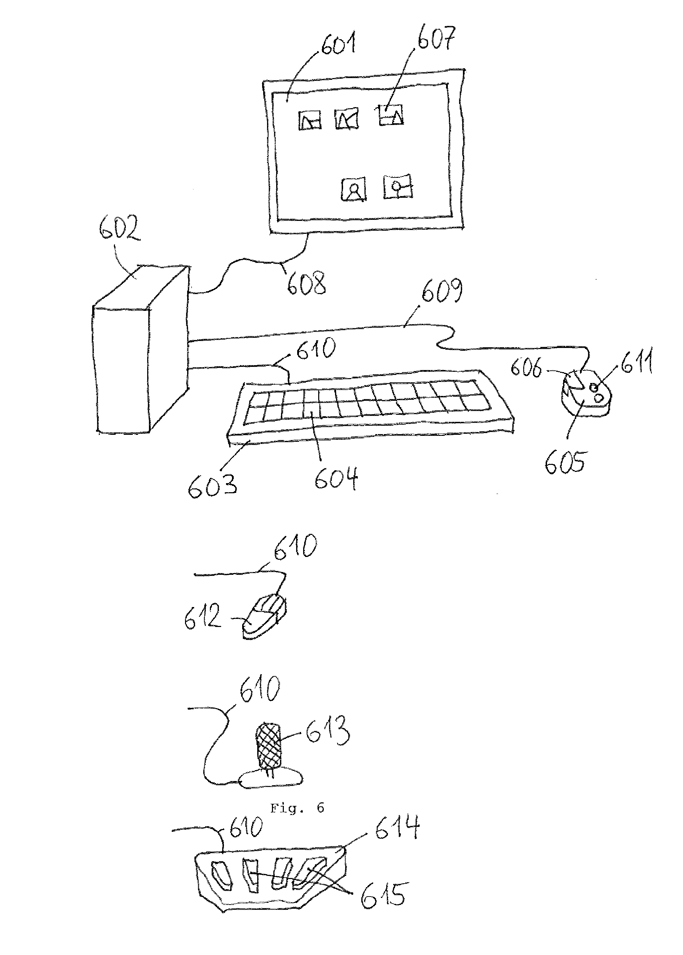

**Fig. 6** illustrates an apparatus equipped and configured to embody the invention. The apparatus comprises a processor **602** having a first connection **608** to a display **601,** and having a second connection **609** to a pointing device **605.** The processor **602** is also equipped and configured to work as an example-based image manipulator, transferring the image characteristic, selected via a second input device **603, 611, 612, 613, 614,** from the example imagery identified with the pointing device **605** to the workpiece imagery identified with the pointing device **605.** The processor **602** has a third connection **610** to the second input device, which may be in the form of a keyboard **603.** Alternatively, the second input device may consist in additional keys **611** provided on the pointing device **605.** Alternatively, the processor **602** may have the third connection **610** to a second pointing device **612.** Alternatively, the processor **602** may have the third connection **610** to a speech input device **613.** Alternatively, the processor **602** may have the third connection **610** to a foot pedal **614.** The display **601** symbolically shows some symbols **607** of images. The pointing device **605** comprises a select element **606.** The keyboard **603** comprises keys **604.** The foot pedal **614** comprises a selection input **615.**

With other words, a method and apparatus for controlling example-based image manipulation are disclosed where selection of example imagery and workpiece imagery is done with a pointing device 605. For increasing the efficiency of controlling, selection of an image characteristic to be transferred is derived from an interaction sensed on a second input device 603, 611, 612, 613, 614 during a motion time interval of the pointing device 605.

## Claims

1. A **method** for controlling an example-based image manipulator (602), comprising:
- receiving start coordinates from a pointing device (605),
- sensing a motion time interval of the pointing device (605),
- receiving end coordinates of the pointing device (605),
- using one of the start coordinates and the end coordinates for identifying a workpiece imagery,
- using a respective other one of the start coordinates and the end coordinates for identifying an example imagery,
- causing the image manipulator (602) to perform the image manipulation of the workpiece imagery such that a selected image characteristic is modified according to a content of the example imagery,
the method **characterized by** a step of sensing an interaction performed on a second input device (603) during at least part of the motion time interval, and deriving therefrom the selected image characteristic.

2. A method according to claim 1, where the second input device is a keyboard (603) and the interaction is a key (604) of this keyboard being pressed.

3. A method according to claim 1, where the second input device is additional keys (611) provided on the pointing device (605) and the interaction is one of these additional keys (611) being clicked.

4. A method according to claim 1, where the second input device is a second pointing device (612) and the interaction is a cursor being moved thereon to one of a predefined set of positions.

5. A method according to claim 1, where the second input device is a second pointing device (612) and the interaction is one of a predefined set of gestures being performed thereon.

6. A method according to claim 1, where the second input device is a speech input device (613) and the interaction is one of a predefined set of commands being spoken into the speech input device.

7. A method according to claim 1, where the second input device is a foot pedal (614) having a selection input (615) and the interaction is a selection being input via the selection input (615).

8. A method according to one of the previous claims, wherein identifying a workpiece imagery comprises selecting more than one images or parts thereof, and the image manipulator (602) is caused to perform the image manipulation on all images or parts thereof of the workpiece imagery.

9. A method according to any one of claims 1 to 7, wherein identifying an example imagery comprises selecting more than one images or parts thereof, and the image manipulator (602) is caused to perform the image manipulation such that the selected image characteristic is modified according to a content of all images or parts thereof of the example imagery.

10. An **apparatus** comprising a display (601), a pointing device (605), and a second input device (603, 611, 612, 613, 614), **characterized by** being equipped and configured to perform a method according to any one of claims 1 to 9.

11. A **computer program product** stored on a computer readable medium, which when executed causes the computer to perform a method for controlling an example-based image manipulator according to any one of claims 1 to 9.
